# EUROPÄISCHE PATENTSCHRIFT

(11) **EP 1 520 843 B1**
(45) Veröffentlichungstag und Bekanntmachung des Hinweises auf die Patenterteilung: **08.04.2009**
(21) Anmeldenummer: 03021097.5
(22) Anmeldetag: 18.09.2003
(51) Int. Cl.: C04B 28/02, C04B 22/14, C04B 24/38, C04B 24/42

(54) **Hydraulisches Bindemittel**
Hydraulic binder
Liant hydraulique

(43) Veröffentlichungstag der Anmeldung: 06.04.2005
(73) Patentinhaber: Kehrmann, Alexander, 46509 Xanten (DE)
(72) Erfinder: Kehrmann, Alexander, 46509 Xanten (DE)
(74) Vertreter: HOFFMANN EITLE

(56) Entgegenhaltungen:
- EP-A- 1 314 706
- DE-U- 29 613 095

## Beschreibung

Die Erfindung betrifft ein hydraulisches Bindemittel mit dem Hauptbestandteil Zement, dem zur Chromatreduzierung Eisen-(II)-sulfat zugefügt ist.

Zement kommt in der Baustoffindustrie als feingemahlenes hydraulisches Bindemittel zur Herstellung von Beton, Mörtel, Betonsteinen und Fertigteilen zur Anwendung. Hierbei wird der Zement oft in Handarbeit verarbeitet. Dies ist insofern nachteilig, weil die üblichen Zemente aufgrund ihres Chromatgehalts als Allergieauslöser für Hautekzeme, der sogenannten Maurerkrätze, gelten.

Chromathaltiger Zement enthält bis zu 100 ppm Chrom(VI)-Verbindungen (Chromate), von denen etwa 20 % löslich sind. Das lösliche Chromat ist die Ursache der allergischen Zementekzeme. Durch Einsatz chromatarmer Zemente und chromatarmer zementhaltiger Zubereitungen, beispielsweise Fliesenkleber oder Trockenmörtel, können diese Erkrankungen weitgehend eliminiert werden. Aus diesem Grund sollen zementhaltige Baustoffe, die von Hand verarbeitet werden, ausschließlich chromatarm hergestellt werden. Chromatarme Zemente enthalten weniger als 2 ppm wasserlösliches Chrom(VI) bezogen auf die Trockenmasse.

In diesem Zusammenhang ist es bekannt, den Chromatgehalt im Zement durch Zugabe eines Reduktionsmittels, nämlich Eisen-(II)-sulfat zu reduzieren. Hierzu wird dem Zement gemäß der DE 197 44 035 A1 trockenes granulatförmiges Eisen-(II)-sulfat in einer Menge von 0,01 bis 1 Gew.-% bei der Entnahme des Zements aus einem Großsilo zugegeben. Beim Anmachen der Mörtel- oder Betonmischung löst sich das granulatförmige Eisen-(II)-sulfat im Anmachwasser auf und kommt beim Vermischen mit dem Chromat(VI) in Kontakt, wodurch dieses chemisch reduziert wird.

Trockenes Eisen-(II)-sulfat verliert jedoch durch Oxidation mit Luftsauerstoff an Wirksamkeit. Aus diesem Grund wird das Eisen-(II)-sulfat dem Zement bei den bekannten Vorschlägen auch erst bei der Entnahme aus dem Großsilo zugegeben, um so die Gefahr einer unerwünschten Reaktion des zugemischten granulatförmigen Eisen-(II)-sulfats mit dem Zement zu verringern.

Im Umfang der DE 100 14 468 A1 ist es bekannt, bei der Herstellung eines Baustoffes aus Zement, Wasser und Zuschlagstoffen beim Anmischvorgang feuchtes Eisen-(II)-sulfat, sogenanntes Grünsalz, zuzufügen. Um das Handling des feuchten Grünsalzes zu verbessern, wird diesem ein Trockenmittel, z.B. gemahlener Kalkstein, zugegeben.

Die DD 275 998 A beschreibt ein Verfahren zur Herstellung von Zement, bei dem der hautschädigende Chrom(VI)-Gehalt bei der Herstellung vom wässrigen Zementzubereitungen vermindert oder beseitigt werden soll. Dies erfolgt durch die Zugabe von Eisen-(II)-sulfat. Hierzu werden dem Mahlstrom vor der Zementvermahlung Stoffe zugegeben, die Eisen-(II)-sulfat in Anteilen von 90 Gew.-% oder mehr und einen Schwefelsäureanteil von 0,5 ― 5 Gew.-% aufweisen.

Grundsätzlich ist aber festzustellen, dass die Reaktionsfähigkeit des Eisen-(II)-sulfats im Zement mit zunehmender Lagerungsdauer bzw. Alterung abnimmt. Die übliche Lagerungsfähigkeit von chromatarmem Zement beträgt drei bis maximal sechs Monate. Bei Überschreiten der Verfallszeit darf der Zement im Grunde genommen nicht mehr verwendet werden, weil der Chromatanteil im Zement dann über der gesetzlich zulässigen Norm von 2 ppm liegt.

Der Erfindung liegt daher ausgehend vom Stand der Technik die Aufgabe zugrunde, ein anwendungstechnisch verbessertes chromatarmes hydraulisches Bindemittel mit einer höheren Lagerungs- bzw. Alterungsbeständigkeit zu schaffen.

Die Lösung dieser Aufgabe besteht nach der Erfindung in einem hydraulischen Bindemittel gemäß Patentanspruch 1.

Kernpunkt der Erfindung bildet die Maßnahme, die Lagerstabilität des hydraulischen Bindemittels durch den Zusatz einer hydrophoben Substanz in Form von polymeren Alkoholen oder Siloxan zu erhöhen.

Vorteilhafte Ausgestaltungen des grundsätzlichen Erfindungsgedankens sind Gegenstand der abhängigen Ansprüche 2 bis 14.

Die polymeren Alkohole werden der Mischung aus Eisen-(II)-sulfat und Trägermaterial zugegeben. Dies führt dazu, dass insbesondere das Eisen-(II)-sulfat eine geringere Affinität zu Feuchtigkeit bzw. Wasser hat und es sich darin weniger löst bzw. weniger benetzen lässt. Das Eisen-(II)-sulfat wird quasi durch die polymeren Alkohole umhüllt, so dass deren Säurecharakter länger erhalten bleibt. Insbesondere wird so die Reaktion mit dem basischen Zement, welche zu einer Neutralisierung des Säureeffekts führen würde, verringert. Das Eisen-(II)-sulfat behält damit länger seine Reduktionseigenschaften für Chrom.

Vorteilhafterweise bestehen die polymeren Alkohole auf Kunststoff- oder Cellulosebasis, insbesondere in körniger Form. Grundsätzlich können die polymeren Alkohole aber auch in flüssiger Form zugegeben werden. Als in der Praxis besonders gute hydrophobe Substanz wird ein Siloxan, insbesondere ein niederviskoses Poly(methylhydrogen)siloxan mit Trimethylsilylendgruppen angesehen.

Bei der erfindungsgemäßen Anwendung zur Hydrophobierung sind bei Siloxan die schnelle Ausbildung des Silikonharz-Netzwerkes, die fehlende Flüchtigkeit und die geringe Alkohol-Abgabe bei der Reaktion vorteilhaft, so dass sie auch bei stark saugender Umgebung eine gute Wirksamkeit aufweisen.

Der Anteil der hydrophoben Substanz, also der polymeren Alkohole bzw. des Siloxans in der Mischung aus Eisen-(II)-sulfat und inertem Trägermaterial liegt erfindungsgemäß zwischen 0,5 Gew.-% bis 10 Gew.-%, vorzugsweise zwischen 1 Gew.-% und 5 Gew.-% bezogen auf die Menge der Mischung.

Zusätzlich kann der Mischung ein den pH-Wert senkendes Säuerungsmittel zugefügt sein. Durch das Säuerungsmittel wird ein saures Milieu im Zement eingestellt. Hierdurch kann die Reaktionsfähigkeit des Eisen-(II)-sulfats und damit die Lagerungsbeständigkeit des Zements weiter verlängert werden. Die Erfindung macht sich hierbei die Erkenntnis zu Eigen, dass der Zement als solcher basisch ist, wohingegen das Eisen-(II)-sulfat sauer ist. Mit zunehmender Lagerungsdauer findet eine Neutralisierung des Eisen-(II)-sulfats durch die basischen Komponenten, beispielsweise die Kalkkomponenten des Zements, statt. Dies wird durch die Zugabe des Säuerungsmittels reduziert. Auf diese Weise kann die Lagerungsbeständigkeit des hydraulischen Bindemittels deutlich erhöht werden. Praktische Versuche haben gezeigt, dass die Lagerungsbeständigkeit um mehr als das Doppelte gegenüber Zementen herkömmlicher Mischung erhöht werden konnte.

Das Säuerungsmittel wird in einer Menge zwischen 0,5 Gew.% bis 10 Gew.%, vorzugsweise zwischen 1 Gew.% und 3 Gew.%, bezogen auf die Menge Eisen-(II)-sulfat zugefügt. Hierdurch kann zuverlässig das gewünschte saure Milieu des Bindemittels eingestellt werden.

Vorzugsweise weist die Mischung eine Körnung auf, deren Siebrückstand auf einem 0,2 mm Sieb kleiner oder gleich 30 % ist. Die Körnung der Mischung ist so fein, dass diese mit unterschiedlichsten Dosieraggregaten präzise und in exakt vorbestimmbaren Mengen dosiert werden kann. Auch bei der Verarbeitung, wie beispielsweise bei Verputzarbeiten, mit einem Baustoff unter Verwendung des erfindungsgemäß vorgesehenen Bindemittels erhält man einen sehr feinen, sehr gut zu verarbeitenden Baustoff. Nachteilige Auswirkungen aus zu groben Körnern sind unterbunden.

Die Klassierung der Mischung auf die gewünschte Korngröße bzw. Feinheit erfolgt vorzugsweise in mechanischen Bearbeitungsvorrichtungen, vorzugsweise Mühlen, wie Kugelmühlen. Die so mit verhältnismäßig geringfügigem Aufwand aufbereitete Mischung aus Grün- oder Filtersalz, Säuerungsmittel und Trägermaterial kann dann problemlos dem Zement zugefügt werden.

Da Eisen-(II)-sulfat von Natur aus schon Schwefelsäure enthält, kommt als Säuerungsmittel vorzugsweise Schwefelsäure (H₂SO₄) zur Anwendung. Die Schwefelsäure wird in flüssiger Form mit dem feuchten Grünsalz gemischt. Anschließend wird die Mischung mit dem Trockenmittel so weit aufbereitet und eingestellt, dass es dem Zement zugegeben werden kann. Die Schwefelsäure kann auch in Form ihrer Salze der Sulfate zugegeben werden.

Grundsätzlich können aber auch andere Säuerungsmittel in flüssiger oder fester Form eingesetzt werden, beispielsweise Salzsäure. Geeignet sind alle Säuerungsmittel, die den pH-Wert des Eisen-(II)-sulfats absenken. Der pH-Wert der Mischung aus Eisen-(II)-sulfat und Säuerungsmittel sollte in der Praxis unterhalb von 4, vorzugsweise zwischen 2 und 3 liegen.

Als Eisen-(II)-sulfat-Lieferant bietet sich insbesondere feuchtes Grünsalz oder Filtersalz aus der Titandioxidproduktion an. Filtersalz aus der Titandioxidproduktion weist bereits produktionsspezifisch einen Anteil von 12% - 25 % Schwefelsäure auf. Folglich kann bei der Verwendung von Filtersalz als Eisen-(II)-sulfat-Lieferant auf die Zugabe eines Säuerungsmittels verzichtet werden.

Das hydraulische Bindemittel besteht aus Zement, dem eine Mischung aus feuchtem Grünsalz oder Filtersalz aus der Titandioxidproduktion als Eisen-(II)-sulfat-Lieferant zusammen mit dem Trägermaterial und der hydrophoben Substanz sowie optional dem Säuerungsmittel zugefügt ist.

Möglich ist auch eine Mischung aus Grünsalz und Filtersalzen aus der Titandioxidproduktion im Verhältnis 1:1 oder 2:1. Das gemischte Material würde dann mit einem inerten Trägermaterial und den hydrophoben Substanzen vermengt werden.

Grünsalz, ebenso wie Filtersalz fällt als Abfall- oder Nebenprodukt bei verschiedenen industriellen Prozessen, beispielsweise der Titandioxidherstellung aus Titanerz an. Bei der Titandioxidherstellung nach dem Sulfatverfahren wird das feingemahlene Titanerz mit konzentrierter Schwefelsäure aufgeschlossen. Das im Erz enthaltene Eisenoxid reagiert zu Eisensulfat, das Titanerz zu Titansulfat. Die Abtrennung des Eisensulfats vom Titansulfat erfolgt durch Kristallisation. Aufgrund der höheren Wasserlöslichkeit kristallisiert das Eisensulfat zu grünem Eisen-(II)-sulfat aus und kann abgetrennt werden. Dieses sogenannte Grünsalz ist mithin ein Abfallprodukt der Titandioxidherstellung. Es ist in der Konsistenz feucht, besitzt jedoch die gleichen chemischen Eigenschaften, insbesondere was die Chromat(VI)-Reduzierung anbelangt. Dabei ist Grünsalz wesentlich kostengünstiger. Gleiches gilt für Filtersalz aus der Titanoxidproduktion.

Durch die Mischung des feuchten Grünsalzes oder Filtersalzes als Eisen-(II)-sulfat-Lieferant, dem Trägermaterial, der hydrophoben Substanz und gegebenenfalls dem Säuerungsmitteln erhält man ein rieselfähiges Produkt. Das Trägermaterial hat innerhalb der Mischung die Funktion der Trocknung und die eines Feuchtigkeitspuffers bzw. -regulators. Die Trocknungs- und Pufferwirkung des Trägermaterials gewährleistet eine optimale Einstellung der Mischung. Die Oxidation mit Luftsauerstoff wird vermieden, ebenso wie ein Verklumpen. Eine aufwendige Aufbereitung oder Trocknung des Grünsalzes/Filtersalzes vor dessen Verarbeitung ist nicht erforderlich. Die Feuchtigkeitsregulierung übernimmt das Trägermaterial. Die hydrophobe Substanz und gegebenenfalls das Säuerungsmittel verlängern die Reduktionsfähigkeit des Eisen-(II)-sulfats für Chrom.

Als inerte Trägermaterialien kommen feinkörnige oder pulverförmige Substrate mit großer Oberflächenstruktur zur Anwendung, die hygroskopische Eigenschaften aufweisen, also Feuchtigkeit aufnehmen und auch abgeben können. Die Erfindung kombiniert so die hydrophoben Eigenschaften der polymeren Alkohole und der hygroskopischen Eigenschaften eines Trägermaterials.

Als besonders gutes Trägermaterial wird ein Silicagel angesehen. Bei Silicagel, auch Kieselgel genannt, handelt es sich um eine festamorphe Kieselsäure, deren Einsatz als Adsorptionsmittel für Gase, Dämpfe und Flüssigkeiten grundsätzlich bekannt ist. Es lässt sich mit verschiedenen Porendurchmessern herstellen. Silicagel absorbieren Feuchtigkeit auf ihrer großen inneren Oberfläche, die bis zu 800 m²/g betragen kann.

Silicagel wird synthetisch hergestellt als Kondensationsprodukt von Siliziumdioxid. Hierzu kann Natriumsilikat mit einer Mineralsäure, beispielsweise Schwefelsäure, gemischt werden. Aus diesen beiden Stoffen wird ein Sol (SiO₂, Na₂SO₄, mal H₂O) erzeugt, welches zu Gallerte erstarrt. Diese wird zerkleinert und gegebenenfalls noch nachbehandelt, um die unterschiedlichsten Eigenschaften wie Porenvolumen, Porendurchmesser und innere Oberfläche einzustellen.

Auch Tonerde, insbesondere aktive Tonerde, kann als Trägermaterial zum Einsatz gelangen. Aktivierte Tonerde ist aktiviertes Aluminiumoxid (Al₂O₃). Es handelt sich um ein natürliches Tonmaterial (Bentonit) in bröseliger Form mit ähnlichen Adsorptionseigenschaften für Feuchtigkeit, wie Silicagel.

In praktischen Versuchen hat sich herausgestellt, dass auch Trockensand mit einer Körnung zwischen 0,1 mm und 0,4 mm sehr gute Eigenschaften als Trägermaterial in der Mischung besitzt.

Des Weiteren ist ein Katalysatorstaub als Trägermaterial gut geeignet. Hierbei handelt es sich insbesondere um Katalysatorstäube aus Claus-Prozessen, also aus Entschwefelungsprozessen, insbesondere solchen in Erdöl- und Erdgasraffinerien. Diese werden innerhalb der Mischung als Trägermaterial eingesetzt. Auf diese Weise kann eine industrielles Abprodukt einer sinnvollen Weiterverarbeitung zugeführt werden. Auch Katalysatorstaub aus Claus-Prozessen zeichnet sich durch eine große innere Oberfläche und gutes Feuchtigkeitsadsorptionsvermögen aus.

Der Anteil an Trägermaterial liegt zwischen 5 Gew.-% und 15 Gew.-%, insbesondere bei ca. 10 Gew.% bezogen auf die Menge des Grünsalzes. Bei diesen Anteilen wird die Funktion des Trägermaterials als Feuchtigkeitspuffer bzw. -regulator zuverlässig erreicht.

Die Trocknungs- und Pufferwirkung des Trägermaterials gewährleistet eine optimale Einstellung der Mischung. Die Oxidation mit Luftsauerstoff wird vermieden, ebenso wie ein Verklumpen. Eine aufwändige Aufbereitung oder Trocknung des Grün- oder Filtersalzes vor dessen Verarbeitung ist nicht erforderlich. Die Feuchtigkeitsregulierung übernimmt das Trägermaterial.

Die Mischung aus Eisen-(II)-sulfat, hydrophober Substanz und Trägermaterial sowie gegebenenfalls Säuerungsmittel wird in einer Menge zwischen 0,2 Gew.% bis 1,0 Gew.% bezogen auf die Zementmenge zugegeben. Hierdurch kann eine wirksame Reduktion des Chromatgehalts bis unterhalb der als gesundheitsbedenklich angesehenen Grenzwerte bewirkt werden.

Zur Einstellung der mechanischen Eigenschaften des unter Verwendung des erfindungsgemäß vorgesehenen hydraulischen Bindemittels hergestellten Baustoffes, beispielsweise des Festigkeits- oder Fließfähigkeitsverhaltens, kann die Mischung noch Zuschlagstoffe enthalten, beispielsweise Zink, Aluminium, Phosphor oder Titanoxid.

Zink beispielsweise dient als Festigkeitsförderer und kommt in einer Menge von < 10 Gew.-% zum Einsatz. Phosphor hat eine verzögernde Wirkung auf die Erstarrungszeit des Zements. Auch Phosphor wird in der Regel in Mengen < 10 % eingesetzt.

## Patentansprüche

1. Hydraulisches Bindemittel, welches Zement als Hauptbestandteil sowie eine Mischung aus Eisen-(II)-sulfat und einem Trägermaterial aufweist, **dadurch gekennzeichnet, dass** der Mischung eine hydrophobe Substanz in Form von polymeren Alkoholen oder Siloxan zugegeben ist.

2. Hydraulisches Bindemittel nach Anspruch 1, **dadurch gekennzeichnet, dass** die polymeren Alkohole auf Kunststoff- oder CelluloseBasis in körniger oder flüssiger Form bestehen.

3. Hydraulisches Bindemittel nach einem der Ansprüche 1 oder 2, **dadurch gekennzeichnet, dass** die hydrophobe Substanz in einer Menge zwischen 0,5 Gew.-% bis 10 Gew.-%, vorzugsweise zwischen 1 Gew.-% und 5 Gew.- %, bezogen auf die Menge von Eisen-(II)-sulfat und Trägermaterial zugefügt ist.

4. Hydraulisches Bindemittel nach einem der Ansprüche 1 bis 3, **dadurch gekennzeichnet, dass** der Mischung ein den pH-Wert senkendes Säuerungsmittel zugegeben ist.

5. Hydraulisches Bindemittel nach Anspruch 4, **dadurch gekennzeichnet, dass** das Säuerungsmittel Schwefelsäure ist.

6. Hydraulisches Bindemittel nach einem der Ansprüche 4 oder 5, **dadurch gekennzeichnet, dass** das Säuerungsmittel in einer Menge zwischen 0,5 Gew.-% bis 10 Gew.-%, vorzugsweise zwischen 1 Gew.-% und 3 Gew.-%, bezogen auf die Menge Eisen-(II)-sulfat zugefügt ist.

7. Hydraulisches Bindemittel nach einem der Ansprüche 1 bis 6, **dadurch gekennzeichnet, dass** das Trägermaterial ein Silicagel ist.

8. Hydraulisches Bindemittel nach einem der Ansprüche 1 bis 6, **dadurch gekennzeichnet, dass** das Trägermaterial eine Tonerde ist.

9. Hydraulisches Bindemittel nach einem der Ansprüche 1 bis 6, **dadurch gekennzeichnet, dass** das Trägermaterial ein Trockensand mit einer Körnung zwischen 0,1 mm und 0,4 mm ist.

10. Hydraulisches Bindemittel nach einem der Ansprüche 1 bis 6, **dadurch gekennzeichnet, dass** das Trägermaterial ein Katalysatorstaub ist.

11. Hydraulisches Bindemittel nach einem der Ansprüche 1 bis 10, **dadurch gekennzeichnet, dass** die Mischung Trägermaterial in einer Menge zwischen 5 Gew.-% bis 15 Gew.-% bezogen auf die Menge Eisen-(II)-sulfat enthält.

12. Hydraulisches Bindemittel nach einem der Ansprüche 1 bis 11, **dadurch gekennzeichnet, dass** die Mischung in einer Menge zwischen 0,01 Gew.-% bis 5,0 Gew.-%, insbesondere zwischen 0,2 Gew.-% bis 1,0 Gew.-%, bezogen auf die Zementmenge zugegeben ist.

13. Hydraulisches Bindemittel nach einem der Ansprüche 1 bis 12, **dadurch gekennzeichnet, dass** das Eisen-(II)-sulfat in Form von Grünsalz zugegeben ist.

14. Hydraulisches Bindemittel nach einem der Ansprüche 1 bis 12, **dadurch gekennzeichnet, dass** das Eisen-(II)-sulfat in Form von Filtersalz aus der Titandioxidproduktion zugegeben ist.

## Claims

1. Hydraulic binding agent comprising cement as the main component together with a mixture of iron(II) sulphate and a support material, **characterised in that** a hydrophobic substance in the form of polymeric alcohols or siloxane is added to the mixture.

2. Hydraulic binding agent according to claim 1, **characterised in that** the polymeric alcohols based on plastic or cellulose are in granular or liquid form.

3. Hydraulic binding agent according to one of claims 1 or 2, **characterised in that** the hydrophobic substance is added in a quantity between 0.5 % by weight to 10 % by weight, preferably between 1 % by weight and 5 % by weight, with respect to the quantity of iron(II) sulphate and support material.

4. Hydraulic binding agent according to any of claims 1 to 3, **characterised in that** an acidifying agent lowering the pH is added to the mixture.

5. Hydraulic binding agent according to claim 4, **characterised in that** the acidifying agent is sulphuric acid.

6. Hydraulic binding agent according to one of claims 4 or 5, **characterised in that** the acidifying agent is added in a quantity between 0.5 % by weight to 10 % by weight, preferably between 1 % by weight and 3 % by weight, with respect to the quantity of iron (II) sulphate.

7. Hydraulic binding agent according to any of claims 1 to 6, **characterised in that** the support material is silica gel.

8. Hydraulic binding agent according to any of claims 1 to 6, **characterised in that** the support material is an argillaceous earth.

9. Hydraulic binding agent according to any of claims 1 to 6, **characterised in that** the support material is a dry sand having a grain size between 0.1 mm and 0.4 mm.

10. Hydraulic binding agent according to any of claims 1 to 6, **characterised in that** the support material is a catalyst powder.

11. Hydraulic binding agent according to any of claims 1 to 10, **characterised in that** the mixture contains support material in a quantity between 5 % by weight to 15 % by weight with respect to the quantity of iron (II) sulphate.

12. Hydraulic binding agent according to any of claims 1 to 11, **characterised in that** the mixture is added in a quantity between 0.01 % by weight to 5.0 % by weight, in particular between 0.2 % by weight to 1.0 % by weight, with respect to the quantity of cement.

13. Hydraulic binding agent according to any of claims 1 to 12, **characterised in that** the iron (II) sulphate is added in the form of green salt.

14. Hydraulic binding agent according to any of claims 1 to 12, **characterised in that** the iron(II) sulphate is added in the form of filter salt from titanium dioxide production.

## Revendications

1. Liant hydraulique, présentant du ciment en tant que composant principal, ainsi qu'un mélange d'un sulfate de fer (II) et d'un matériau support, **caractérisé en ce qu'**au mélange est ajoutée une substance hydrophobe, se présentant sous la forme d'alcools polymères ou de siloxane.

2. Liant hydraulique selon la revendication 1, **caractérisé en ce que** les alcools polymères sont à base de matière synthétique ou de cellulose, se présentant sous forme granuleuse ou liquide.

3. Dispositif selon l'une des revendications 1 ou 2, **caractérisé en ce que** la substance hydrophobe est ajoutée en une quantité comprise entre 0,5 % en poids et 10% en poids, de préférence entre 1% en poids et 5 % en poids, en se référant à la quantité de sulfate de fer (II) et de matériau support.

4. Dispositif selon l'une des revendications 1 à 3, **caractérisé en ce qu'**au mélange est ajouté un agent acidifiant, diminuant la valeur du pH.

5. Liant hydraulique selon la revendication 4, **caractérisé en ce que** l'agent acidifiant est l'acide sulfurique.

6. Dispositif selon l'une des revendications 4 ou 5, **caractérisé en ce que** l'agent acidifiant est ajouté en une quantité comprise entre 0,5 % en poids et 10 % en poids, de préférence entre 1 % en poids et 3 % en poids, en se référant à la quantité de sulfate de fer (II).

7. Dispositif selon l'une des revendications 1 à 6, **caractérisé en ce que** le matériau support est un gel de silice.

8. Dispositif selon l'une des revendications 1 à 6, **caractérisé en ce que** le matériau support est de l'alumine.

9. Dispositif selon l'une des revendications 1 à 6, **caractérisé en ce que** le matériau support est un sable sec, d'une granulométrie comprise entre 0,1 mm et 0,4 mm.

10. Dispositif selon l'une des revendications 1 à 6, **caractérisé en ce que** le matériau support est de la poussière de catalyseur.

11. Dispositif selon l'une des revendications 1 à 10, **caractérisé en ce que** le mélange contient du matériau support en une quantité comprise entre 5 % en poids et 15 % en poids, en se référant à la quantité de sulfate de fer (II).

12. Dispositif selon l'une des revendications 1 à 11, **caractérisé en ce que** le mélange est ajouté en une quantité comprise entre 0,01 % en poids et 5,0 % en poids, en particulier entre 0,2 % en poids et 1,0 % en poids, en se référant à la quantité de ciment.

13. Dispositif selon l'une des revendications 1 à 12, **caractérisé en ce que** le sulfate de fer (II) est ajouté sous forme de sel vert.

14. Dispositif selon l'une des revendications 1 à 12, **caractérisé en ce que** le sulfate de fer (II) est ajouté sous forme der sel de filtrage, issu de la production de dioxyde de titane.
